# EUROPEAN PATENT SPECIFICATION

(11) **EP 3 747 685 B1**
(45) Date of publication and mention of the grant of the patent: **07.10.2026**
(21) Application number: 19305726.2
(22) Date of filing: 05.06.2019
(51) Int. Cl.: B60L 15/20

(54) **METHOD FOR CONTROLLING THE PROPULSION SYSTEM OF A RAILWAY VEHICLE, COMPUTER READABLE MEDIUM WITH SOFTWARE CODE FOR PERFORMING SUCH METHOD, AND RELATED RAILWAY VEHICLE**
VERFAHREN ZUR STEUERUNG DES ANTRIEBSSYSTEMS EINES SCHIENENFAHRZEUGS, COMPUTERLESBARES MEDIUM MIT SOFTWARECODE ZUR DURCHFÜHRUNG SOLCH EINES VERFAHRENS UND ENTSPRECHENDES SCHIENENFAHRZEUG
PROCÉDÉ DE COMMANDE DU SYSTÈME DE PROPULSION D'UN VÉHICULE FERROVIAIRE, SUPPORT LISIBLE SUR ORDINATEUR DOTÉ D'UN CODE DE LOGICIEL POUR EFFECTUER CE PROCÉDÉ ET VÉHICULE FERROVIAIRE CORRESPONDANT

(43) Date of publication of application: 09.12.2020
(73) Proprietor: ALSTOM Holdings, 93400 Saint-Ouen-sur-Seine (FR)
(72) Inventor: STEINDORFF, Konrad, 38118 BRAUNSCHWEIG (DE); VON DER FECHT, Diethelm, 38162 CREMLINGEN (DE); SCHRANK, Stefan, 37574 Einbeck (DE)
(74) Representative: Plasseraud IP

(56) References cited:
- WO-A1-2007/143850
- DE-A1- 102013 204 603

## Description

The present invention concerns a method for controlling the propulsion system of a railway vehicle, and in particular to a method for controlling the propulsion system of a railway vehicle so that the traction power delivered on the bogie axle or wheel rim of the railway vehicle, is regulated in such a way that a boosting reserve traction power is still available when the railway vehicle is running at its nominal maximum speed.

The present invention also relates to a computer readable medium having software code stored therein for performing such control method when the instructions included in the software code are executed by a processor.

Further, the present invention also encompasses a railway vehicle whose propulsion system is controlled according to the above indicated method.

It is known that in the field of railways applications, relevant standard requirements dictate, inter alia, that railway vehicles must have a residual minimum acceleration capability when reaching their nominal maximum speed.

For example, relevant regulations of the Technical Specification for Interoperability of the rolling stock subsystem-Locomotives and the passenger rolling stock (TSI LOC&PAS), which are promulgated by the European Railway Agency, require a residual acceleration of 0.05 m/s² at maximum speed at the level of the railway tracks.

To meet such requirements, solutions commonly adopted foresee to reduce the weight of a railway vehicle, and/or to increase the available overall motive power system, e.g. by installing more engines, or by integrating more drive power on-board of railway vehicles.

Both options entail considerable costs and have some limits, if being at all possible.

For example, in some cases the reduction of weight cannot be lowered under a certain limit, for example due to the intrinsic structure and/or robustness that a railway vehicle must have in relation for example to its service duties.

On the other hand, the implementation of more engine power on board usually results in a higher weight of the power system, and thus of the railway vehicle as a whole.

In addition, while the driving performance is generally improved by increasing the motive power available on-board, at the same time the power increase implies a corresponding increase of energy consumption.

Further, whichever of the above options is implemented, it cannot be applied to all types of railway vehicles, nor it can be properly and conveniently implemented in all types of existing power propulsion systems.

For instance, in case of trains using fuel cell systems as main power generation source, an oversized design of available motive power would encounter the problem of extra-space required for storing an additional quantity of hydrogen.

The same problem of space availability could be faced also with other types of power systems, thus requiring a design ad hoc for newly build railways vehicles, and, de facto, excluding in many cases, the possibility of refurbishing existing vehicles to upgrade their efficiency.

International patent application WO 2007/143850 A1 discloses control systems for selecting the number of operating power sources for a vehicle, such a locomotive, having a plurality of engines and of energy storage systems. Several operating modes for different locomotive speed ranges and work loads can be selected via a common DC bus electrical architecture so that power sources available do not need to be synchronized. The locomotive can be provided with a control panel that allows to use only a battery pack if for example a momentary power surge is required and it would be inefficient to start another engine.

DE 102013204603 A1 discloses a method for operating a rail vehicle with a plurality of drive motors, in which the drive motors are controlled by a control device in such a way that a drive force of the drive motors has a predetermined force characteristic; the drive motors have different predetermined force characteristics depending on different operating modes.

Therefore, it is quite evident the need of having railway vehicles where the traction power delivered by their own propulsion system is appropriately controlled to better face the above indicated issues and solve, at least partially, some of the indicated drawbacks, while suitably meeting the required or desired operational functionalities and technical requirements.

Hence, it is a main aim of the present invention to provide a solution offering substantial improvements over the current state of the art, in particular as regard to the capability of obtaining a desired residual acceleration once a given railway vehicle has achieved its nominal maximum speed, without needing to oversize the propulsion system installed on board just for this purpose.

Within the scope of this aim, an object of the present invention is to provide a solution for obtaining a desired residual acceleration once a given railway vehicle has achieved its nominal maximum speed, which can be implemented in principle with any convenient type of railway vehicles and with any type of traction power systems used therewith, such as modern fuel cell, or other battery driven power systems, traditional electric power systems, fuel burning engines or motors, et cetera.

Yet a further object of the present invention is to provide a solution for obtaining a desired residual acceleration once a given railway vehicle has achieved its nominal maximum speed, which is highly reliable, easy to realize and at competitive costs.

This aim, these objects and others which will become apparent hereinafter are achieved by a method for controlling the propulsion system of a railway vehicle travelling on a railway line, the method comprising at least the following steps:
(a): driving up the propulsion system of said railway vehicle so that the traction power delivered on at least one of a wheel rim or a bogie axle of the railway vehicle is controlled to increase, relative to the actual speed of the railway vehicle, from an initial traction power value up to a first predetermined traction power value while the actual speed of the railway vehicle rises correspondingly from an initial speed value up to a first predetermined speed value;
(b): controlling the propulsion system so that the actual traction power delivered on said at least one of a wheel rim or a bogie axle of the railway vehicle is maintained substantially constant at said first predetermined traction power value at least until the actual speed of the railway vehicle increases from the first predetermined speed value up to a second predetermined speed value; the method being characterized in that it further comprises at least the step of:
(c): boosting the propulsion system so that the actual traction power delivered on said at least one of a wheel rim or a bogie axle of the railway vehicle is caused to increase, relative to the actual speed of the railway vehicle, from said first predetermined traction power value up to a second predetermined traction power value while the actual speed of the railway vehicle rises correspondingly from said second predetermined speed value up to its nominal maximum speed value while retaining a residual acceleration capability at least equal to a predetermined threshold value when the railway vehicle reaches said nominal maximum speed value.

According to other peculiar aspects and possible embodiments, the method for controlling the propulsion system of a railway vehicle travelling on a railway line according to the present invention comprises one or more of the following characteristics, taken individually or in any possible combination:
- the step (a) of driving up the propulsion system comprises regulating the propulsion system so that the actual traction power delivered on at least one of a wheel rim or a bogie axle of the railway vehicle varies from the initial traction power value up to a first predetermined traction power value following a first desired according to which the actual speed of the railway vehicle rises correspondingly from the initial speed value up to the first predetermined speed value;
- the step (c) of boosting the propulsion system comprises regulating the propulsion system so that the actual traction power delivered on at least one of a wheel rim or a bogie axle of the railway vehicle varies from the first predetermined traction power value up to a second predetermined traction power value following a corresponding desired profile according to which the actual speed of the railway vehicle varies correspondingly from a second predetermined speed value up to the nominal maximum speed value of the railway vehicle;
- the step (c) of boosting the propulsion system comprises comparing the actual speed of the railway vehicle with the second predetermined speed value during the interval of time needed for the actual speed of the railway vehicle to rise from the second
speed value up to the nominal maximum speed value;
- the step (b) of controlling the propulsion system comprises regulating the propulsion system so that the actual traction power delivered on at least one of a wheel rim or a bogie axle of the railway vehicle is maintained substantially constant at a first predetermined traction power value which is lower than the nominal maximum traction power deliverable by said propulsion system by a predefined amount;
- a further step (d) of overdriving the propulsion system of the railway vehicle above the nominal maximum traction power deliverable by the propulsion system itself for a predetermined interval of time after the railway vehicle has reached the nominal maximum speed value;
- a further step (e), carried out for example before the step (a), wherein the actual excess traction effort required for obtaining the desired residual acceleration capability when the railway vehicle reaches said nominal maximum speed value is pre-calculated.

Advantageously, the control method according to present invention is suitable for being implemented both in the control systems of newly manufactured railway vehicles and for upgrading the control systems or railway vehicles already in service since time.

Hence, another aspect of the present invention relates to a railway vehicle comprising a propulsion system suitable to provide traction power for the railway vehicle, and an on-board control system for controlling the traction power delivered by the propulsion system on at least one of a wheel rim or a bogie axle of the railway vehicle, characterized in that said on-board control system is configured to control the propulsion system according to a method as herein described, and in particular as defined in one or more of the appended relevant claims.

Advantageously, the control method according to the present invention can be implemented also via software code which can be stored on whatever type of computer readable medium for distribution and/or download on a processor-based device.

Hence, a further aspect of the present invention relates to a computer readable medium having software code stored therein which, when executed by a processor, causes said processor to carry out or make carry out a method for controlling the propulsion system delivered by a motor of a railway vehicle according to a method as described herein, and in particular as defined in one or more of the appended relevant claims.

Further characteristics and advantages will become apparent from the description of some preferred but not exclusive exemplary embodiments of a control method and related railway vehicle according to the present disclosure, illustrated only by way of non-limitative examples with the accompanying drawings, wherein:
Figure 1 is a flow chart schematically illustrating a method for controlling the propulsion system of a railway vehicle travelling on a railway line according to the present invention;
Figure 2 is a graph exemplary showing a profile of traction power delivered at a rim of a wheel of the railway vehicle obtained using the control method of figure 1, as well as the trend of the corresponding traction force and driving resistance;
Figure 3 schematically represents an exemplary embodiment of a railway vehicle provided with an-board control system for controlling the traction power delivered at a rim of a wheel of the railway vehicle according to the control method illustrated in figure 1.

It should be noted that in the detailed description that follows, identical or similar components, either from a structural and/or functional point of view, have the same reference numerals, regardless of whether they are shown in different embodiments of the present disclosure.

It should also be noted that to clearly and concisely describe the present disclosure, the drawings may not necessarily be to scale, and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part.

In particular, for electronic and/or software means, each of the above listed terms means and encompasses electronic circuits or parts thereof, as well as stored or running software codes and/or routines, algorithms, or complete programs, suitably designed for achieving the technical results and/or the functional performances for which such means are devised.

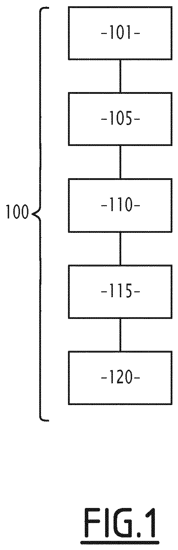

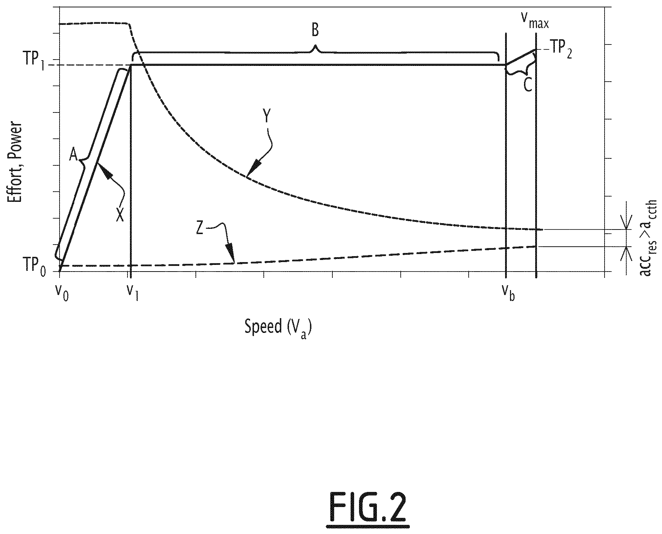

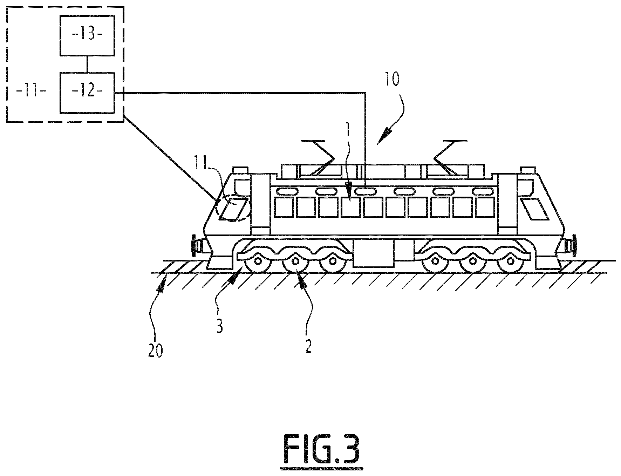

A method for controlling the propulsion system of a railway vehicle, indicated in the exemplary embodiment of figure 3 by the reference number 10, is indicated in figure 1 by the overall reference number 100 and will be described hereinafter by referring also to the graph of figure 2.

In particular, in the graph of figure 2, the horizontal axis of the abscissas represents the actual speed Vₐ of the railway vehicle 10, while the vertical axis of the ordinates represents the traction/effort power delivered by a propulsion system 1 of the railway vehicle.

In such graph, there are illustrated a curve X showing the trend of the traction power delivered at the rim of a wheel rim 2 or a bogie axle 3 of the railway vehicle 10 using a method 100 according to the invention, and the corresponding curves Y and Z showing the corresponding trends of the driving force and the resistance force, respectively.

As represented in figure 1, the method 100 according to the present invention comprises at least a first step 105 of driving up the propulsion system of the railway vehicle 10, schematically indicated in figure 3 by the reference number 1, so that the traction power TPₐ delivered on at least one of a wheel rim 2 or a bogie axle 3 of the railway vehicle 10 is controlled to increase, relative to the actual speed Vₐ of the railway vehicle 10, from an initial traction power value TP₀ up to a first predetermined traction power value TP, while the actual speed Vₐ of the railway vehicle 10 raises correspondingly from an initial speed value V₀ up to a first predetermined speed value V₁, as illustrated in figure 2.

In the example illustrated in figure 2, the initial values of the traction power TP₀ and of the actual speed Vₐ are zero, namely they correspond to a railway vehicle starting to move from a stopped position.

According to a possible embodiment of the control method 100, the step 105 of driving up the propulsion system 1 of the railway vehicle 10 comprises driving the propulsion system 1 so that the actual traction power TPₐ delivered on at least one of a wheel rim 2 or a bogie axle 3 of the railway vehicle 10 varies, and in particular increases relative to the actual speed Vₐ of the railway vehicle 10, from the initial traction power value TP₀ up to the first predetermined traction power value TP, following a first desired profile (A) during which the actual speed Vₐ of the railway vehicle 10 rises correspondingly from the initial speed value V₀ up to the first predetermined speed value V₁.

As per the example illustrated in figure 2, such first desired profile (A) is substantially rectilinear and, compatibly with the propulsion system of a given railway vehicle 10, preferably as steep as possible to achieve the first predetermined traction power value TP, in the shortest time possible.

The method 100 further comprises a second step 110 of controlling the propulsion system 1 of the railway vehicle 10 so that the actual traction power TPₐ delivered on at least one of a wheel rim 2 or a bogie axle 3 of the railway vehicle 10 is maintained substantially constant at the first predetermined traction power value TP, at least until the actual speed Vₐ of the railway vehicle 10 increases from the first predetermined speed value V, up to a second predetermined speed value V_{b}, as per the second rectilinear profile (B) depicted in figure 2.

With the definition of actual traction power TPₐ delivered substantially constant, it has to be understood hereby that, along the indicated second rectilinear profile (B), the actual value of the traction powered delivered is equal to the desired first predetermined traction power value TP, +/-5%, due to unavoidable and intrinsic fluctuations which might be caused by various factors as those skilled in the art would readily appreciate.

In addition, as illustrated in figure 1, the method 100 comprises at least a third step 115 of boosting the propulsion system 1 of the railway vehicle 10 so that the actual traction power TPₐ delivered on the at least one of a wheel rim 2 or a bogie axle 3 of the railway vehicle 10 is caused to increase, relative to the actual speed Vₐ of the railway vehicle 10, from the substantially constant value, i.e. the first predetermined traction power value TP₁, up to a second predetermined traction power value TP₂ while the actual speed Vₐ of the railway vehicle 10 rises correspondingly from the second predetermined speed value V₀ up to a nominal maximum speed value Vₘₐₓ of the railway vehicle 10 while retaining a residual acceleration capability accᵣₑₛ at least equal to a predetermined threshold value accₜₕ when the railway vehicle 10 reaches its nominal maximum speed value Vₘₐₓ.

The value of the residual acceleration capability accᵣₑₛ, at least equal to a predetermined threshold value accₜₕ, can be dictated by standards, and/or it can be suitably selected according to specific needs or applications.

According to a possible embodiment of the control method 100, the third step 115 of boosting the propulsion system 1 of the railway vehicle 10 comprises regulating the propulsion system 1 so that the actual traction power TPₐ delivered on at least one of a wheel rim 2 or a bogie axle 3 of the railway vehicle 10 varies, and in particular increases relative to the actual speed Vₐ of the railway vehicle 10, from the first predetermined traction power value TP, up to a second predetermined traction power value TP₂ following a corresponding desired profile, .e.g. a third profile (C), during which the actual speed Vₐ of the railway vehicle 10 rises correspondingly from the second predetermined speed value V₂ up to the said nominal maximum speed value Vₘₐₓ.

As illustrated in figure 2, also the third profile (C) is for example substantially rectilinear.

In another possible embodiment, the step 115 of boosting the propulsion system of the railway vehicle 10 includes comparing the actual speed Vₐ of the railway vehicle 10 with the second predetermined speed value V_{b} during an interval of time needed for the actual speed Vₐ of the railway vehicle 10 to rise from the second speed value V_{b} up to the nominal maximum speed value Vₘₐₓ.

In one possible embodiment, in particular with railway vehicles 10 whose propulsion system 1 would be sufficient for, or even oversized with respect to, the amount of traction power necessary to guarantee the desired residual acceleration acc_{resid} at the nominal maximum speed Vₘₐₓ, the second driving step 110 comprises keeping the traction power delivered substantially constant at the first predetermined traction power value TP₁, wherein such first predetermined traction power value TP, is lower than the nominal maximum traction power deliverable on a rim 2 or boogie axle 3 of a predetermined amount.

Such predetermined amount can be suitably selected according to the specific applications and is for example comprised between 5% and 20% of the maximum traction power deliverable.

According to another possible embodiment, and in particular with railway vehicles 10 whose propulsion system 1 would not be sufficient for providing the amount of traction power necessary to guarantee the desired residual acceleration acc_{resid} at the nominal maximum speed Vₘₐₓ, the method 100 comprises a further step 120 of overdriving the propulsion system 1 of the railway vehicle 10 above the nominal maximum traction power deliverable by the propulsion system 1 itself for a predetermined interval of time after the railway vehicle 10 has reaches its nominal maximum speed value Vₘₐₓ.

In a further possible embodiment, the method 100 comprises, for example before the first step 105 of driving up the propulsion system 1 of the railway vehicle 10, a step 101 of pre-calculating the actual excess traction effort required for obtaining the desired residual acceleration capability accᵣₑₛ when the railway vehicle 10 reaches it nominal maximum speed value Vₘₐₓ.

With this pre-calculated value, an operator can for example suitably and accordingly parameterize or map the propulsion system 1 or parts thereof.

As above indicated, figure 3 illustrates an exemplary embodiment of a railway vehicle 10 comprising, inter alia, a propulsion system 1, e.g. a motor and related transmission mechanisms, suitable to provide traction power for the railway vehicle, and an on-board control system 11 for controlling the traction power delivered on at least one of a wheel rim 2 or a bogie axle 3 of the railway vehicle itself.

In particular, in one possible embodiment, the on-board control system 11 comprises a processor-based device 12, e.g. a programmer microcontroller or processor, and software code embedded or stored in a storing unit, e. g. a memory 13, wherein such software code is configured, when running on the processor-based device 12, to cause the on-board control system 11 to control the propulsion system 1 according to a method 100 as previously described, and in particular as detailed in one or more of the appended relevant claims.

The processor-based device 12 can be any type commercially available on the market, e.g. of the type already used in the existing on-board control systems of trains.

As those skilled in the art would further appreciated, the inventive solution provided according to the present disclosure, can also take the form of software code which can be stored on any computer readable medium, e.g. on a memory, CD, USB keys, hard disks, the cloud, et cetera, containing the instructions needed, written in whatever suitable software language, that, when executed by a processor, cause the processor to carry out or to make carry out the method 100 for controlling the traction power delivered by a propulsion system 1, as previously described, and in particular as detailed in one or more of the appended relevant claims.

Hence, it is evident from the foregoing description that the method 100 and railway vehicle 10 according to the present invention allow achieving the intended aim and objects since the power delivered by the propulsion system installed on-board of a railway vehicle is controlled in a way that ensures the availability of a desired or required residual acceleration accᵣₑₛ when the railway vehicle runs at its nominal maximum speed Vₘₐₓ, by suitably tailoring the trend profile of the traction power delivered during service operation and without oversizing for such goal the propulsion system 1.

These results are achieved according to a solution very flexible that can be applied with very simple and minor modifications, if any at all, when building new railway vehicles or when intervening on existing ones, where the capability of the propulsion system available can be exploited, at least up to certain limits, even in cases where such capability would be nominally undersized with respect to the traction power needed for obtaining the desired or required residual acceleration accᵣₑₛ.

In this way, the present invention finds a suitable balance between the conflicting goals of having more power available when a required residual acceleration should be obtained at top speed, while under other driving operations less power would be sufficient and advantageous regarding timetable fulfilment and energy consumption.

In addition, the propulsion system, and especially the related control system, can be parameterized or mapped upfront to follow a predetermined power trend profile and achieve the required residual acceleration accᵣₑₛ, or it can be upgraded later on during the vehicle service lifetime, for example by downloading the software code including the relevant instructions if and when desired.

For example, Va is comprised between 10% and 50%, preferentially between 10% and 30% of Vmax and Vb is comprised between 70% and 95% of Vmax, preferentially between 80% and 95% of Vmax.

The method 100 and railway vehicle 10 thus conceived are susceptible of modifications and variations, all of which are within the scope of the inventive concept as defined in particular by the appended claims; for example, in relation to the specific application, as those skilled in the art would appreciate, the trend profile followed by the traction power illustrated in figure 2 may be different according to the specific applications and peculiar needs, provided that it would remain compatible to achieve the scope and technical results devised for the present invention; the propulsion system can be constituted by or comprise only one single motor or engine, or several units operatively coordinated; the railway vehicle can be any type of suitable railway vehicle.

## Claims

1. A method (100) for controlling the propulsion system (1) of a railway vehicle (10) travelling on a railway line (20), the method comprising at least the following steps:
- (105): driving up the propulsion system (1) of said railway vehicle (10) so that the traction power (TPₐ) delivered on at least one of a wheel rim (2) or a bogie axle (3) of the railway vehicle (10) is controlled to increase, relative to the actual speed (Vₐ) of the railway vehicle (10), from an initial traction power value (TP₀) up to a first predetermined traction power value (TP,) while the actual speed (Vₐ) of the railway vehicle (10) rises correspondingly from an initial speed value (V₀) up to a first predetermined speed value (V₁);
- (110): controlling said propulsion system (1) so that the actual traction power (TPₐ) delivered on said at least one of a wheel rim (2) or a bogie axle (3) of the railway vehicle (10) is maintained substantially constant at said first predetermined traction power value (TP₁) at least until the actual speed (Vₐ) of the railway vehicle (10) increases from the first predetermined speed value (V₁) up to a second predetermined speed value (V_{b}); the method being **characterized in that** it further comprises at least the step of:
- (115): boosting the propulsion system (1) so that the actual traction power (TPₐ) delivered on said at least one of a wheel rim (2) or a bogie axle (3) of the railway vehicle (10) is caused to increase, relative to the actual speed (Vₐ) of the railway vehicle (10), from said first predetermined traction power value (TP₁) up to a second predetermined traction power value (TP₂) while the actual speed (Vₐ) of the railway vehicle (10) rises correspondingly from said second predetermined speed value (V_{b}) up to its nominal maximum speed value (Vₘₐₓ) while retaining a residual acceleration capability (accᵣₑₛ) at least equal to a predetermined threshold value (accₜₕ) when the railway vehicle (10) reaches said nominal maximum speed value (Vₘₐₓ).

2. A method (100) for controlling the propulsion system (1) of a railway vehicle (10) according to claim 1, wherein said step (105) of driving up the propulsion system (1) of said railway vehicle (10) comprises regulating the propulsion system (1) so that said actual traction power (TPₐ) delivered varies from said initial traction power value (TP₀) up to said first predetermined traction power value (TP₁) following a first desired profile (A) according to which the actual speed (Vₐ) of the railway vehicle (10) raises correspondingly from said initial speed value (V₀) up to said first predetermined speed value (V₁).

3. A method (100) for controlling the propulsion system (1) of a railway vehicle (10) according to claim 1 or 2, wherein said step (115) of boosting the propulsion system (1) comprises regulating the propulsion system (1) so that the actual traction power (TPₐ) delivered on at least one of a wheel rim (2) or a bogie axle (3) of the railway vehicle (10) varies, relative to the actual speed (Vₐ) of the railway vehicle (10), from said first predetermined traction power value (TP₁) up to a second predetermined traction power value (TP₂) following a corresponding desired profile (C) according to which the actual speed (Vₐ) of the railway vehicle (10) varies correspondingly from said second speed value (V_{b}) up to said nominal maximum speed value (Vₘₐₓ).

4. A method (100) for controlling the propulsion system (1) of a railway vehicle (10) according to claim 3, wherein said step (115) of boosting the propulsion system (1) includes comparing the actual speed (Vₐ) of the railway vehicle (10) with said second predetermined speed value (V_{b}) during an interval of time needed for the actual speed (Vₐ) of the railway vehicle (10) to rise from said second speed value (V_{b}) up to said nominal maximum speed value (Vₘₐₓ).

5. A method (100) for controlling the propulsion system (1) of a railway vehicle (10) according to any one of the previous claims, wherein said step (110) of controlling the propulsion system (1) comprises regulating the propulsion system (1) so that said actual traction power (TPₐ) delivered is maintained substantially constant at said first predetermined traction power value (TP₁) which is lower than the nominal maximum traction power deliverable by said propulsion system (1) of a predetermined amount.

6. A method (100) for controlling the propulsion system (1) of a railway vehicle (10) according to any one of the previous claims, wherein it comprises the further step (120) of overdriving the propulsion system (1) of the railway vehicle (10) above the nominal maximum traction power deliverable by said propulsion system (1) for a predetermined interval of time after the railway vehicle (10) reaches said nominal maximum speed value (Vₘₐₓ).

7. A method (100) for controlling the propulsion system (1) of a railway vehicle (10) according to any one of the previous claims, wherein it comprises, before said step (105) of driving up the propulsion system (1) of said railway vehicle (10), a step of pre-calculating (101) the excess traction effort required for obtaining the desired residual acceleration capability (accᵣₑₛ) when the railway vehicle (10) reaches said nominal maximum speed value (Vₘₐₓ).

8. A railway vehicle (10) comprising a propulsion system (1) suitable to provide traction power for the railway vehicle, and an on-board control system (11) for controlling the traction power delivered by the propulsion system (1) on at least one of a wheel rim (2) or a bogie axle (3) of the railway vehicle (10), **characterized in that** said on-board control system (11) is configured to control the propulsion system (1) according to a method (100) as in one or more of the previous claims.

9. A computer readable medium having software code stored therein that, when executed by a processor, causes said processor to carry out or to make carry out a method (100) for controlling the propulsion system (1) of a railway vehicle (10) travelling on a railway line (20) according to one or more of claims 1 to 7.

## Patentansprüche

1. Verfahren (100) zum Steuern des Antriebssystems (1) eines Schienenfahrzeugs (10), welches sich auf einer Eisenbahnstrecke (20) fortbewegt, wobei das Verfahren wenigstens die folgenden Schritte umfasst:
- (105): Anfahren des Antriebssystems (1) des Schienenfahrzeugs (10), sodass die Traktionsleistung (TPₐ), welche an wenigstens eines von einem Radkranz (2) oder einer Drehgestellachse (3) des Schienenfahrzeugs (10) abgegeben wird, gesteuert wird, um relativ zu der tatsächlichen Geschwindigkeit (Vₐ) des Schienenfahrzeugs (10) von einem initialen Traktionsleistungswert (TP₀) auf einen ersten vorbestimmten Traktionsleistungswert (TP₁) anzusteigen, während die tatsächliche Geschwindigkeit (Vₐ) des Schienenfahrzeugs (10) entsprechend von einem initialen Geschwindigkeitswert (V₀) auf einen ersten vorbestimmten Geschwindigkeitswert (V₁) zunimmt;
- (110): Steuern des Antriebssystems (1), sodass die tatsächliche Traktionsleistung (TPₐ), welche an wenigstens eines von einem Radkranz (2) oder einer Drehgestellachse (3) des Schienenfahrzeugs (10) abgegeben wird, bei dem ersten vorbestimmten Traktionsleistungswert (TP₁) im Wesentlichen konstant gehalten wird, wenigstens bis die tatsächliche Geschwindigkeit (Vₐ) des Schienenfahrzeugs (10) von dem ersten vorbestimmten Geschwindigkeitswert (V₁) auf einen zweiten vorbestimmten Geschwindigkeitswert (V_{b}) ansteigt; wobei das Verfahren **dadurch gekennzeichnet ist, dass** es ferner wenigstens den Schritt umfasst von:
- (115): Erhöhen der Leistung des Antriebssystems (1), sodass die tatsächliche Traktionsleistung (TPₐ), welche an das wenigstens eine von einem Radkranz (2) oder einer Drehgestellachse (3) des Schienenfahrzeugs (10) abgegeben wird, veranlasst wird, relativ zu der tatsächlichen Geschwindigkeit (Vₐ) des Schienenfahrzeugs (10) von dem ersten vorbestimmten Traktionsleistungswert (TP₁) auf einen zweiten vorbestimmten Traktionsleistungswert (TP₂) anzusteigen, während die tatsächliche Geschwindigkeit (Vₐ) des Schienenfahrzeugs (10) entsprechend von dem zweiten vorbestimmten Geschwindigkeitswert (V_{b}) auf seinen nominalen maximalen Geschwindigkeitswert (Vₘₐₓ) zunimmt, während eine Restbeschleunigungsfähigkeit (accᵣₑₛ) erhalten bleibt, welche wenigstens gleich wie ein vorbestimmter Schwellenwert (accₜₕ) ist, wenn das Schienenfahrzeug (10) den nominalen maximalen Geschwindigkeitswert (Vₘₐₓ) erreicht.

2. Verfahren (100) zum Steuern des Antriebssystems (1) eines Schienenfahrzeugs (10) nach Anspruch 1, wobei der Schritt (105) des Anfahrens des Antriebssystems (1) des Schienenfahrzeugs (10) ein Regulieren des Antriebssystems (1) umfasst, sodass die abgegebene tatsächliche Traktionsleistung (TPₐ) von dem initialen Traktionsleistungswert (TP₀) auf den ersten vorbestimmten Traktionsleistungswert (TP₁) variiert, indem es einem ersten angestrebten Profil (A) folgt, gemäß welchem die tatsächliche Geschwindigkeit (Vₐ) des Schienenfahrzeugs (10) entsprechend von dem initialen Geschwindigkeitswert (V₀) auf den ersten vorbestimmten Geschwindigkeitswert (V₁) zunimmt.

3. Verfahren (100) zum Steuern des Antriebssystems (1) eines Schienenfahrzeugs (10) nach Anspruch 1 oder 2, wobei der Schritt (115) des Erhöhens der Leistung des Antriebssystems (1) ein Regulieren des Antriebssystems (1) umfasst, sodass die tatsächliche Traktionsleistung (TPₐ), welche an wenigstens eines von einem Radkranz (2) oder einer Drehgestellachse (3) des Schienenfahrzeugs (10) abgegeben wird, relativ zu der tatsächlichen Geschwindigkeit (Vₐ) des Schienenfahrzeugs (10) von dem ersten vorbestimmten Traktionsleistungswert (TP₁) auf den zweiten vorbestimmten Traktionsleistungswert (TP₂) variiert, indem es einem entsprechenden, angestrebten Profil (C) folgt, gemäß welchem die tatsächliche Geschwindigkeit (Vₐ) des Schienenfahrzeugs (10) entsprechend von dem zweiten Geschwindigkeitswert (V_{b}) auf den nominalen maximalen Geschwindigkeitswert (Vₘₐₓ) variiert.

4. Verfahren (100) zum Steuern des Antriebssystems (1) eines Schienenfahrzeugs (10) nach Anspruch 3, wobei der Schritt (115) des Erhöhens der Leistung des Antriebssystems (1) ein Vergleichen der tatsächlichen Geschwindigkeit (Vₐ) des Schienenfahrzeugs (10) mit dem zweiten vorbestimmten Geschwindigkeitswert (V_{b}) während eines Zeitintervalls umfasst, welches benötigt ist, damit die tatsächliche Geschwindigkeit (Vₐ) des Schienenfahrzeugs (10) von dem zweiten Geschwindigkeitswert (V_{b}) auf den nominalen maximalen Geschwindigkeitswert (Vₘₐₓ) zunimmt.

5. Verfahren (100) zum Steuern des Antriebssystems (1) eines Schienenfahrzeugs (10) nach einem der vorhergehenden Ansprüche, wobei der Schritt (110) des Steuerns des Antriebssystems (1) ein Regulieren des Antriebssystems (1) umfasst, sodass die abgegebene tatsächliche Traktionsleistung (TPₐ) bei dem ersten vorbestimmten Traktionsleistungswert (TP₁) im Wesentlichen konstant gehalten wird, welcher um ein vorbestimmtes Ausmaß niedriger ist, als die nominale maximale Traktionsleistung, welche durch das Antriebssystems (1) abgebbar ist.

6. Verfahren (100) zum Steuern des Antriebssystems (1) eines Schienenfahrzeugs (10) nach einem der vorhergehenden Ansprüche, wobei es ferner den Schritt (120) eines Übersteuerns des Antriebssystems (1) des Schienenfahrzeugs (10) über die nominale maximale Traktionsleistung umfasst, welche durch das Antriebssystem (1) abgebbar ist, für ein vorbestimmtes Zeitintervall, nachdem das Schienenfahrzeug (10) den nominalen maximalen Geschwindigkeitswert (Vₘₐₓ) erreicht.

7. Verfahren (100) zum Steuern des Antriebssystems (1) eines Schienenfahrzeugs (10) nach einem der vorhergehenden Ansprüche, wobei es vor dem Schritt (105) des Anfahrens des Antriebssystems (1) des Schienenfahrzeugs (10) einen Schritt eines Vorausrechnens (101) des überschüssigen Traktionsaufwands umfasst, welcher erforderlich ist, um die angestrebte Restbeschleunigungsfähigkeit (accᵣₑₛ) zu erhalten, wenn das Schienenfahrzeug (10) den nominalen maximalen Geschwindigkeitswert (Vₘₐₓ) erreicht.

8. Schienenfahrzeug (10), umfassend ein Antriebssystem (1), welches dazu geeignet ist, Traktionsleistung für das Schienenfahrzeug bereitzustellen, und ein Bordsteuerungssystem (11) für ein Steuern der Traktionsleistung, welche durch das Antriebssystem (1) an wenigstens eines von einem Radkranz (2) oder einer Drehgestellachse (3) des Schienenfahrzeugs (10) abgegeben wird, **dadurch gekennzeichnet, dass** das Bordsteuerungssystem (11) dazu eingerichtet ist, das Antriebssystem (1) gemäß einem Verfahren (100) nach einem oder mehreren der vorhergehenden Ansprüche zu steuern.

9. Computerlesbares Medium, welches darin gespeicherten Softwarecode aufweist, welcher, wenn er durch einen Prozessor ausgeführt wird, den Prozessor dazu veranlasst, ein Verfahren (100) zum Steuern des Antriebssystems (1) eines Schienenfahrzeugs (10), welches sich auf einer Eisenbahnstrecke (20) fortbewegt, nach einem oder mehreren der Ansprüche 1 bis 7 durchzuführen oder durchführen zu lassen.

## Revendications

1. Procédé (100) de commande du système de propulsion (1) d'un véhicule ferroviaire (10) circulant sur une ligne ferroviaire (20), le procédé comprenant au moins les étapes suivantes :
- (105) : la montée du système de propulsion (1) dudit véhicule ferroviaire (10) de sorte que la puissance de traction (TPₐ) délivrée sur au moins un parmi une jante (2) ou un essieu de bogie (3) du véhicule ferroviaire (10) soit commandée pour augmenter, par rapport à la vitesse réelle (Vₐ) du véhicule ferroviaire (10), d'une valeur de puissance de traction initiale (TP₀) à une première valeur de puissance de traction prédéterminée (TP₁) tandis que la vitesse réelle (Vₐ) du véhicule ferroviaire (10) augmente en conséquence d'une valeur de vitesse initiale (V₀) à une première valeur de vitesse prédéterminée (V₁) ;
- (110) : la commande dudit système de propulsion (1) de sorte que la puissance de traction réelle (TPₐ) délivrée sur ledit au moins un parmi une jante (2) ou un essieu de bogie (3) du véhicule ferroviaire (10) soit maintenue sensiblement constante à ladite première valeur de puissance de traction prédéterminée (TP₁) au moins jusqu'à ce que la vitesse réelle (Vₐ) du véhicule ferroviaire (10) augmente de la première valeur de vitesse prédéterminée (V₁) à une seconde valeur de vitesse prédéterminée (Vb) ; le procédé étant **caractérisé en ce qu'**il comprend en outre au moins l'étape suivante :
- (115) : l'amplification du système de propulsion (1) de sorte que la puissance de traction réelle (TPₐ) délivrée sur ledit au moins un parmi une jante (2) ou un essieu de bogie (3) du véhicule ferroviaire (10) soit amenée à augmenter, par rapport à la vitesse réelle (Vₐ) du véhicule ferroviaire (10), de ladite première valeur de puissance de traction prédéterminée (TP₁) à une seconde valeur de puissance de traction prédéterminée (TP₂) tandis que la vitesse réelle (Vₐ) du véhicule ferroviaire (10) augmente en conséquence de ladite seconde valeur de vitesse prédéterminée (V_{b}) à sa valeur de vitesse maximale nominale (Vₘₐₓ) tout en conservant une capacité d'accélération résiduelle (accᵣₑₛ) au moins égale à une valeur seuil prédéterminée (accₜₕ) lorsque le véhicule ferroviaire (10) atteint ladite valeur de vitesse maximale nominale (Vₘₐₓ).

2. Procédé (100) de commande du système de propulsion (1) d'un véhicule ferroviaire (10) selon la revendication 1, dans lequel ladite étape (105) de montée du système de propulsion (1) dudit véhicule ferroviaire (10) comprend la régulation du système de propulsion (1) de sorte que ladite puissance de traction réelle (TPₐ) délivrée varie de ladite valeur de puissance de traction initiale (TP₀) à ladite première valeur de puissance de traction prédéterminée (TP₁) suivant un premier profil souhaité (A) selon lequel la vitesse réelle (Vₐ) du véhicule ferroviaire (10) augmente en conséquence de ladite valeur de vitesse initiale (V₀) jusqu'à ladite première valeur de vitesse prédéterminée (V₁).

3. Procédé (100) de commande du système de propulsion (1) d'un véhicule ferroviaire (10) selon la revendication 1 ou 2, dans lequel ladite étape (115) d'amplification du système de propulsion (1) comprend la régulation du système de propulsion (1) de sorte que la puissance de traction réelle (TPₐ) délivrée sur au moins un parmi une jante (2) ou un essieu de bogie (3) du véhicule ferroviaire (10) varie, par rapport à la vitesse réelle (Vₐ) du véhicule ferroviaire (10), de ladite première valeur de puissance de traction prédéterminée (TP₁) à une seconde valeur de puissance de traction prédéterminée (TP₂) suivant un profil souhaité correspondant (C) selon lequel la vitesse réelle (Vₐ) du véhicule ferroviaire (10) varie en conséquence de ladite seconde valeur de vitesse (V_{b}) jusqu'à ladite valeur de vitesse maximale nominale (Vₘₐₓ).

4. Procédé (100) de commande du système de propulsion (1) d'un véhicule ferroviaire (10) selon la revendication 3, dans lequel ladite étape (115) d'amplification du système de propulsion (1) inclut la comparaison de la vitesse réelle (Vₐ) du véhicule ferroviaire (10) à ladite seconde valeur de vitesse prédéterminée (V_{b}) pendant un intervalle de temps nécessaire pour que la vitesse réelle (Vₐ) du véhicule ferroviaire (10) augmente de ladite seconde valeur de vitesse (V_{b}) à ladite valeur de vitesse maximale nominale (Vₘₐₓ).

5. Procédé (100) de commande du système de propulsion (1) d'un véhicule ferroviaire (10) selon l'une quelconque des revendications précédentes, dans lequel ladite étape (110) de commande du système de propulsion (1) comprend la régulation du système de propulsion (1) de sorte que ladite puissance de traction réelle (TPₐ) délivrée soit maintenue sensiblement constante à ladite première valeur de puissance de traction prédéterminée (TP₁) qui est inférieure à la puissance de traction maximale nominale pouvant être délivrée par ledit système de propulsion (1) d'une quantité prédéterminée.

6. Procédé (100) de commande du système de propulsion (1) d'un véhicule ferroviaire (10) selon l'une quelconque des revendications précédentes, dans lequel il comprend l'étape (120) supplémentaire de surmultiplication du système de propulsion (1) du véhicule ferroviaire (10) au-dessus de la puissance de traction maximale nominale pouvant être délivrée par ledit système de propulsion (1) pendant un intervalle de temps prédéterminé après que le véhicule ferroviaire (10) a atteint ladite valeur de vitesse maximale nominale (Vₘₐₓ).

7. Procédé (100) de commande du système de propulsion (1) d'un véhicule ferroviaire (10) selon l'une quelconque des revendications précédentes, dans lequel il comprend, avant ladite étape (105) de montée du système de propulsion (1) dudit véhicule ferroviaire (10), une étape de précalcul (101) de l'effort de traction excédentaire nécessaire pour obtenir la capacité d'accélération résiduelle souhaitée (accᵣₑₛ) lorsque le véhicule ferroviaire (10) atteint ladite valeur de vitesse maximale nominale (Vₘₐₓ₎.

8. Véhicule ferroviaire (10) comprenant un système de propulsion (1) apte à fournir une puissance de traction au véhicule ferroviaire, et un système de commande embarqué (11) pour commander la puissance de traction délivrée par le système de propulsion (1) sur au moins un parmi une jante (2) ou un essieu de bogie (3) du véhicule ferroviaire (10), **caractérisé en ce que** ledit système de commande embarqué (11) est configuré pour commander le système de propulsion (1) conformément à un procédé (100) selon une ou plusieurs des revendications précédentes.

9. Support lisible par ordinateur sur lequel est stocké un code logiciel qui, lorsqu'il est exécuté par un processeur, amène ledit processeur à réaliser ou à faire réaliser un procédé (100) de commande du système de propulsion (1) d'un véhicule ferroviaire (10) circulant sur une ligne ferroviaire (20) selon une ou plusieurs des revendications 1 à 7.
